(19) Europäisches Patentamt
European Patent Office
Office européen des brevets

(11) **EP 4 138 379 A1**

(12) **EUROPEAN PATENT APPLICATION**
published in accordance with Art. 153(4) EPC

(43) Date of publication:
**22.02.2023 Bulletin 2023/08**

(21) Application number: **21803147.4**

(22) Date of filing: **08.05.2021**

(51) International Patent Classification (IPC):
**H04N 5/232** (2006.01)     **G06K 9/00** (2006.01)

(52) Cooperative Patent Classification (CPC):
**G06F 18/00; G06T 3/00; G06T 3/40; G06V 10/24; G06V 10/40; H04N 23/60**

(86) International application number:
**PCT/CN2021/092402**

(87) International publication number:
**WO 2021/227988 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.05.2020 CN 202010392999**

(71) Applicants:
• **Huawei Technologies Co., Ltd.**
  **Shenzhen, Guangdong 518129 (CN)**
• **Bei Hang University**
  **Haidian District, Beijing 100191 (CN)**

(72) Inventors:
• **LU, Feng**
  **Beijing 100191 (CN)**

• **WANG, Zhimin**
  **Beijing 100191 (CN)**
• **DING, Xin**
  **Shenzhen, Guangdong 518129 (CN)**
• **LU, Yuewan**
  **Shenzhen, Guangdong 518129 (CN)**
• **ZHOU, Heng**
  **Shenzhen, Guangdong 518129 (CN)**
• **HUANG, Jiejing**
  **Shenzhen, Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **FACE IMAGE PROCESSING METHOD, APPARATUS AND DEVICE, AND COMPUTER READABLE STORAGE MEDIUM**

(57)    A face image processing method and apparatus, a device, and a computer readable storage medium are provided. The face image processing method includes: obtaining a face image; detecting an eye feature based on the face image, and obtaining eye feature data, where the eye feature includes an eyelid and an iris, and the eye feature data includes an eyelid key point, an iris center, and an iris radius; determining an eye adjustment degree based on the eye feature data; and adjusting the eye feature in the face image based on the eye adjustment degree, to obtain a processed image. According to the face image processing method, real-time correction is performed on a human eye sight line in a face image, so that a direction of a human eye sight line in an image or a video can be adjusted into directly looking at the other party, which resolves a problem of poor experience caused by sight lines without contact, and creates a more real and natural video and photographing effect.

```
                                                    ┌────────────────────────────────┐  S100
                                                    │      Obtain a face image       │
                                                    └────────────────────────────────┘
                                                                    │
                                                                    ▼
        ┌──────────────────────────────────────────────────────────────────────┐  S200
        │ Detect an eye feature based on the face image, and obtain eye feature  │
        │ data, where the eye feature includes an eyelid and an iris, and the    │
        │ eye feature data includes an eyelid key point, an iris center, and an  │
        │ iris radius                                                            │
        └──────────────────────────────────────────────────────────────────────┘
                                                                    │
                                                                    ▼
        ┌──────────────────────────────────────────────────────────────────────┐  S300
        │  Determine an eye adjustment position based on the eye feature data    │
        └──────────────────────────────────────────────────────────────────────┘
                                                                    │
                                                                    ▼
        ┌──────────────────────────────────────────────────────────────────────┐  S400
        │  Adjust the eye feature in the face image based on the eye adjustment  │
        │  position, to obtain a processed image                                 │
        └──────────────────────────────────────────────────────────────────────┘
```

FIG. 3

Processed by Luminess, 75001 PARIS (FR)

**Description**

This application claims priority to Chinese Patent Application No. 202010392999.4, filed with the China National Intellectual Property Administration on May 11, 2020 and entitled "FACE IMAGE PROCESSING METHOD AND APPARATUS, DEVICE, AND COMPUTER READABLE STORAGE MEDIUM", which is incorporated herein by reference in its entirety.

**TECHNICAL FIELD**

This application relates to the face recognition field, and specifically, to a face image processing method and apparatus, a video call method, a device, and a computer readable storage medium.

**BACKGROUND**

A front-facing camera is currently a necessary part of a mobile phone, a tablet computer, and a computer, and is widely used for taking a selfie or making a video call. A resolution of the front-facing camera is becoming higher. In a video call process, images seen by two communication parties are becoming clearer.

A front-facing camera on a computer is generally installed on an upper part of a screen frame, or is hidden in a keyboard region. A front-facing camera of a mobile phone is also located on an upper or lower part of a frame. A position of the front-facing camera is somewhat deviated from a position of a screen. When front-facing cameras of these devices obtain an image of a photographer, the photographer usually takes a selfie by facing an image of the photographer on a screen of the mobile phone instead of directly facing the camera, or when a video call is made on a computer, for example, a person tends to make the video call by facing the other side of the screen instead of the camera. In the foregoing case, there is a specific angle between a human eye sight line and a connection line between the camera and the human eye, and consequently, there is a phenomenon, for example, the eye is dull and video communication is unnatural, which is easily noticed by a communication object and affects user experience.

**SUMMARY**

In view of this, this application provides a face image processing method and apparatus, a device, and a computer readable storage medium. According to the face image processing method, real-time correction is performed on a human eye sight line in a face image, so that a direction of a human eye sight line in an image or a video can be adjusted into directly looking at a camera, which resolves a problem of poor experience caused by sight lines without contact, and creates a more real and natural video and photographing effect.

The following describes this application in a plurality of aspects. For the following implementations and beneficial effects of the plurality of aspects, references may be made to each other.

According to a first aspect, this application provides a face image processing method, where the method includes: obtaining a face image; detecting an eye feature based on the face image, and obtaining eye feature data, where the eye feature includes an eyelid and an iris, and the eye feature data includes an eyelid key point, an iris center, and an iris radius; determining an eye adjustment degree based on the eye feature data; and adjusting the eye feature in the face image based on the eye adjustment degree, to obtain a processed image.

According to an implementation of this application, when a terminal device (a terminal device such as a mobile phone, a tablet computer, a computer, a desktop computer, or a large-screen device) is used to make a video call or perform photographing, a face image is obtained by using a camera of the terminal device. Then, an eye feature including an iris is detected based on the face image, and eye feature data including an eyelid key point, an iris center, and an iris radius is obtained. In the method, the eye feature in the face image is adjusted based on the eye feature data, and by performing real-time correction on a human eye sight line in the face image, a direction of a human eye sight line in an image or a video can be adjusted into directly looking at a camera, which resolves a problem of poor experience caused by sight lines without contact, so as to achieve a more real and natural video and photographing effect. The eyelid key point is sometimes also referred to as an eye key point, which refers to key points that are distributed from two eye corner points along upper and lower eyelid edge outlines.

In a possible implementation of the first aspect, the detecting an eye feature based on the face image, and obtaining eye feature data includes: determining two eye corner points of each eye based on the face image; extracting an eye region from the face image by using the two eye corner points as a reference; and detecting the eye feature in the eye region to obtain the eye feature data. That is, two eye corner points of each eye may be first determined by using an eye detection algorithm, next an eye region is extracted from the face image by using the two eye corner points as a reference, and then the eye feature is detected in the eye region to obtain the eye feature data. Actually, sight line adjustment only involves an eye and a region around the eye. Therefore, it is unnecessary to calculate an entire face image, and only an eye region in the entire face image needs to be calculated, thereby greatly reducing a calculation amount. An eye corner point is one of key points of each eye, and calculation and detection of two eye corner points of each eye are relatively mature technologies. Based on this, it is determined that an eye region can be relatively quickly and accurately obtained.

In a possible implementation of the first aspect, the extracting an eye region from the face image by using the two eye corner points as a reference includes: determining an eye image on the face image by using the two eye corner points as a reference; and processing the eye image to an image with a predetermined pixel value to obtain the eye region, where a connection line between the two eye corner points is in a horizontal state. That is, first, the eye image is determined on the face image when the two eye corner points are used as a reference and the connection line between the two eye corner points is in a horizontal state. Then, the eye image is processed to the image with a predetermined pixel value to obtain the eye region. The image with a predetermined pixel value refers to an image with a predetermined size. That is, an image with a specific size is obtained as an eye region by capturing by using the connection line between the two eye corner points, upper and lower frames parallel to the connection line and left and right frames perpendicular to the connection line. Therefore, an adjustment degree may be calculated only in the eye region and adjustment is performed based on this. Therefore, a calculation amount can be greatly reduced, and real-time adjustment can be made more smoothly.

In a possible implementation of the first aspect, the detecting the eye feature in the eye region to obtain the eye feature data includes: detecting the eyelid key point in the eye region; determining an eyeball part mask within an eyelid based on the eyelid key point; determining an iris outline based on the eyeball part mask; and determining the iris center and iris radius based on the iris outline. That is, first, in the eye region, the eyelid key point is detected (a detection method may be, for example, a DLIB method); next, the eyeball part mask within the eyelid is determined based on the eyelid key point; then, the iris outline is determined based on the eyeball part mask; and thereafter, the iris center and iris radius are determined based on the iris outline.

In a possible implementation of the first aspect, the determining an eyeball part mask within an eyelid based on the eyelid key point includes: fitting upper and lower eyelid curves based on the eyelid key point by using a quadratic function; correcting an eyelid key point that deviates from the upper and lower eyelid curves; and determining the eyeball part mask within the eyelid based on a corrected eyelid key point. That is, first, the upper and lower eyelid curves are fitted based on the eyelid key point by using a quadratic function; next, the eyelid key point deviating from the upper and lower eyelid curves is corrected to smooth the curves; and then, the eyeball part mask within the eyelid is determined based on the corrected eyelid key point. Therefore, impact caused by some noises can be eliminated, so that the eyeball part mask can be more accurate.

In a possible implementation of the first aspect, the determining an iris outline based on the eyeball part mask includes: performing brightness equalization to adjust a grayscale value of the eyeball part mask to obtain a grayscale map with predetermined brightness; and performing thresholding processing on the grayscale map to obtain the iris outline after thresholding. That is, first, brightness equalization is performed to adjust the grayscale value of the eyeball part mask to obtain a grayscale map with predetermined brightness; and then, thresholding processing is performed on the grayscale map to obtain the iris outline after thresholding. After thresholding processing, a change of eye feature data caused by a brightness change can be eliminated.

In a possible implementation of the first aspect, the determining the iris center and iris radius based on the iris outline includes: performing ellipse fitting on the iris outline after thresholding, using a center of an ellipse obtained by fitting as the iris center, and using a semi-major axis of the ellipse as the iris radius. That is, ellipse fitting is performed on the iris outline after thresholding, and the iris center and the iris radius are determined based on the ellipse obtained by fitting. After ellipse fitting, impact caused by some noises can be removed, so that an obtained eye feature parameter is closer to a real eye feature parameter.

In a possible implementation of the first aspect, the determining an eye adjustment degree based on the eye feature data includes: determining, based on the eye feature data, whether the eye is blinking currently, and when it is determined that the eye is not blinking, determining the eye adjustment degree based on the eye feature data of the face image of the current frame, where the eye adjustment degree includes an eyelid adjustment position and an iris center adjustment position; and when it is determined that the eye is blinking currently, invoking the eye adjustment degree of a previous unblinking image in the last frame. That is, after the eye feature is detected based on the face image and the eye feature data is obtained, next it is determined, based on the eye feature data, whether the eye is blinking currently. Then, when it is determined that the eye is not blinking currently, the eye adjustment degree is determined based on the eye feature data of the face image of the current frame, and when it is determined that the eye is blinking currently, the eye adjustment degree of a previous unblinking image in the last frame is invoked. In a video, an iris parameter cannot be determined under a blinking frame image. By invoking eye feature data of a previous unblinking image in the last frame before blinking, an image that an eye is blinking currently can be processed into an image that an eye is not blinking. In addition, because an eye adjustment position of a previous image in the last frame is invoked, the iris center adjustment position is continuous, so that video communication between two parties can be more natural, and user experience can be further improved.

In a possible implementation of the first aspect, the determining, based on the eye feature data, whether the eye is blinking currently includes: calculating a ratio of an iris exposed part to an iris circle based on the iris outline after thresholding to obtain an iris ratio; calculating an eye aspect ratio based on the eyelid key point; and determining, based on the iris ratio and the eye aspect ratio, whether the eye is blinking currently. That is, the ratio of the iris exposed part to the iris circle is calculated to determine the iris ratio; the eye aspect ratio is calculated based on the eyelid key point; and when the iris ratio and the eye aspect ratio meet a predetermined condition (for example, when both are less than their respective specific thresholds), it is determined that the eye is blinking currently, and otherwise the eye is not blinking.

In a possible implementation of the first aspect, the determining the eye adjustment degree based on the eye feature data includes: determining an iris center adjustment position based on the two eye corner points; and determining an eyelid adjustment position based on the iris center adjustment position, where the eyelid adjustment position includes an upper eyelid highest point adjustment position and a lower eyelid lowest point adjustment position. That is, the iris center adjustment position is determined by using a predetermined value biased upward or downward (a size of the predetermined value is related to a position of the camera of the terminal device on the screen) that is in a vertical direction and that is of the center of the connection line of the two eye corner points in the eyelid key point, and the eye feature data is combined with the iris center adjustment position, so as to determine the upper eyelid highest point adjustment position and the lower eyelid lowest point adjustment position.

In a possible implementation of the first aspect, the adjusting the eye feature in the face image based on the eye adjustment degree position to obtain a processed image includes: separately adjusting an upper eyelid highest point to the upper eyelid highest adjustment position, and a lower eyelid lowest point to the lower eyelid lowest point adjustment position, and performing column-by-column pixel translation on remaining eyelid pixels in the eye region to perform eyelid adjustment; and synthesizing an iris image based on the iris center, and moving the iris center to the iris center adjustment position to perform iris adjustment. That is, first, separately the upper eyelid highest point is adjusted to the upper eyelid highest adjustment position, the lower eyelid lowest point is adjusted to the lower eyelid lowest point adjustment position, and column-by-column pixel translation is performed on the remaining eyelid pixels in the eye region, to perform eyelid adjustment; and then, in an adjusted eyelid, a synthesized iris image is filled at the iris center adjustment position to perform iris adjustment.

In a possible implementation of the first aspect, column-by-column pixel translation is performed in a middle predetermined range in the eye region, and after pixel translation, a gap generated after translation is filled by scaling based on a region outside the middle predetermined range in the eye region. That is, column-by-column pixel translation is performed in the middle predetermined range in the eye region, and after pixel translation, a gap generated after translation is filled by scaling based on the region outside the predetermined range in the eye region. In addition, it should be noted herein that the middle predetermined range refers to a remaining middle region in the eye region except a predetermined width of a frame near the eye region. The middle region does not need to be a center region, that is, widths reserved near the upper, lower, left and right frames may be set as required, or may be the same or different. In this way, good transition can be formed in the eye region, and no corresponding gap is left in a translated region due to pixel translation.

In a possible implementation of the first aspect, after the iris outline after thresholding is obtained, an eye white part mask is further obtained based on the eyeball part mask and the iris outline after thresholding; after eyelid adjustment, eye white compensation is performed based on the eye white part mask; and after eye white compensation, the iris image is synthesized, and the iris center is moved to a holeadjustment position. That is, the eyelid is first adjusted, then the eye white is compensated, and finally, iris synthesis and adjustment are performed. Therefore, a difference between a blank part left after the iris center moves and a real eye white part can be avoided, so that a problem of an unnatural image can be fixed.

In a possible implementation of the first aspect, the face image processing method further includes: obtaining head feature data based on the face image; and determining a head rotation angle based on the head feature data, and performing rotation processing on the face image based on the head rotation angle. That is, not only eye adjustment needs to be performed, but also head adjustment is performed based on a head deflection degree. It should be noted that, the eye adjustment may be performed after the head rotation processing is performed first, or the head rotation processing may be performed after the eye adjustment is performed first. The head is rotated first and then the eye is adjusted, so that an adjusted eye feature is closer to a front-facing angle. In this way, both a face and an eye feature are adjusted, so that video communication between two parties can be more natural; and a case in which users cannot naturally communicate with each other in a video call due to face tilts caused by that the users look at a screen of a terminal device and a case in which the face tilts during photographing due to a display position can be avoided.

According to a second aspect, this application provides a face image processing apparatus, where the face image processing apparatus may include: an image collection module, configured to obtain a face image; a feature detection module, configured to detect an eye feature based on the face image, and obtain eye feature data, where the eye feature includes an eyelid and an iris, and the eye feature data includes an eyelid key point, an iris center, and an iris radius; an adjustment degree determining module, configured to determine an eye adjustment degree based on the eye feature data; and an adjustment module, configured to adjust the eye feature in the face image based on the eye feature data to obtain a processed image.

In a possible implementation of the second aspect, the feature detection module may include:

an eye corner point determining module, configured to determine two eye corner points of each eye based on the face image;

an eye region extraction module, configured to extract an eye region from the face image by using the two eye corner points as a reference; and

an eye feature data calculation module, configured to detect the eye feature in the eye region to obtain the eye feature data.

In a possible implementation of the second aspect, the eye region extraction module may include:

an eye image determining module, configured to determine an eye image on the face image by using the two eye corner points as a reference; and

an eye region obtaining module, configured to process the eye image into an image with a predetermined pixel value to obtain the eye region, where a connection line of the two eye corner points is in a horizontal state.

In a possible implementation of the second aspect, the eye feature data calculation module may include:

an eyelid key point detection module, configured to detect an eyelid key point in the eye region;

an eyeball part mask determining module, configured to determine an eyeball part mask within an eyelid based on the eyelid key point;

an iris outline determining module, configured to determine an iris outline based on the eyeball part mask; and

an iris center and iris radius determining module, configured to determine the iris center and iris radius based on the iris outline.

In a possible implementation of the second aspect, the eyeball part mask determining module may include:

an upper and lower eyelid curve obtaining module, configured to fit the upper and lower eyelid curves based on the eyelid key point by using a quadratic function;

an eyelid key point correction module, configured to correct an eyelid key point deviating from the upper and lower eyelid curves; and

an eyeball part mask confirmation module, configured to determine the eyeball part mask within the eyelid based on the corrected eyelid key point.

In a possible implementation of the second aspect, the iris outline determining module may include:

a grayscale map obtaining module, configured to perform brightness equalization to adjust a grayscale value of the eyeball part mask to obtain a grayscale map with predetermined brightness; and

an iris outline obtaining module, configured to perform thresholding processing on the grayscale map to obtain the iris outline after thresholding.

In a possible implementation of the second aspect, the iris center and iris radius determining module may be configured to: perform ellipse fitting on the iris outline after thresholding, use a center of an ellipse obtained by fitting as the iris center, and use a semi-major axis of the ellipse as the iris radius.

In a possible implementation of the second aspect, the adjustment degree determining module may include:

an eye blink determining module, configured to determine, based on the eye feature data, whether an eye is blinking currently; and

an adjustment degree obtaining module, configured to: when it is determined that the eye is not blinking, determine the eye adjustment degree based on the eye feature data of the face image of the current frame, where the eye adjustment degree includes an eyelid adjustment position and an iris center adjustment position; and when it is determined that the eye is blinking currently, invoke the eye adjustment degree of a previous unblinking image in the last frame.

In a possible implementation of the second aspect, the eye blink determining module may include:

an iris ratio calculation module, configured to calculate a ratio of an iris exposed part to an iris circle based on the iris outline after thresholding, to obtain an iris ratio;

an eye aspect ratio calculation module, configured to calculate an eye aspect ratio based on the eyelid key point; and

a determining module, configured to determine, based on the iris ratio and the eye aspect ratio, whether the eye is blinking currently.

In a possible implementation of the second aspect, the eye adjustment degree determining module may include:

an iris center adjustment position determining module, configured to determine an iris center adjustment position based on the two eye corner points; and

an eyelid adjustment position determining module, configured to determine an eyelid adjustment position based on the iris center adjustment position, where the eyelid adjustment position includes an upper eyelid highest point adjustment position and a lower eyelid lowest point adjustment position.

In a possible implementation of the second aspect, the adjustment module may include:

an eyelid adjustment module, configured to: separately adjust an upper eyelid highest point to the upper eyelid highest adjustment position, adjust a lower eyelid lowest point to the lower eyelid lowest point adjustment position, and perform column-by-column pixel translation on remaining eyelid pixels in the eye region, to perform eyelid adjustment; and

an iris adjustment module, configured to: synthesize an iris image based on the iris center, and move the iris center to the iris center adjustment position.

In a possible implementation of the second aspect, the eyelid adjustment module is specifically configured to: perform column-by-column pixel translation in a middle predetermined range in the eye region, and after pixel translation, fill a gap generated after translation by scaling based on a region outside the predetermined range in the eye region.

In a possible implementation of the second aspect, the adjustment module may further include: an eye white compensation module, configured to: obtain an eye white part mask based on the eyeball part mask and the iris outline after thresholding; after eyelid adjustment, perform eye white compensation based on the eye white part mask; and after eye white compensation, synthesize the iris image, and move the iris center to the iris center adjustment position.

In a possible implementation of the second aspect, the face image processing apparatus further includes: a face image rotation module, configured to: obtain head feature data based on the face image, determine a head rotation angle, and perform rotation processing on the face image based on the head rotation angle.

According to a third aspect, this application provides a video call method that is applied to a terminal device and includes: when a video call is started or during a video call, processing a face image of a participant in the video call by using the foregoing face image processing method by enabling a sight line correction function, and outputting a processed face image to a terminal device of a video call object. That is, when a video call is started or during a video call, the face image processing method described above is used to correct a sight line, so that a direction of a human eye sight line in a video is adjusted to directly looking at a camera, and an image is output to a terminal device of a video call object; and a terminal of a call object can display an effect that the sight line directly faces the call object, thereby making video communication between two parties more natural.

In a possible implementation of the third aspect, the video call method includes:

enabling a video call application;

detecting whether a sight line of a person in a video call is facing the front;

when it is detected that the sight line is not facing the front, a sight line correction confirmation option appearing on the terminal device; and

when sight line correction is selected, enabling a sight line correction function.

That is, whether to enable the sight line correction function is manually selected in a video call can meet a user's intention to use the sight line correction function in each video call, thereby increasing user autonomy.

In a possible implementation of the third aspect, the sight line correction function is enabled or disabled by using a preset switch, for example, may be enabled or disabled by using a setting option added to video call software or photographing function software. That is, whether the sight line correction function is enabled or disabled is preset, which can simplify a sight line correction enablement function, so that the sight line correction function can be more conveniently used in a video call.

According to a fourth aspect, this application provides an electronic device, including: one or more processors; and one or more memories, where computer readable code is stored therein, and when the one or more processors run the computer readable code, the processor performs the foregoing face image processing method according to any one of the possible implementations of the first aspect in this application.

According to a fifth aspect, this application provides a computer readable storage medium, where computer readable code is stored therein, and when one or more processors run the computer readable code, the processor performs the foregoing face image processing method according to any one of the possible implementations of the first aspect in this application.

**BRIEF DESCRIPTION OF DRAWINGS**

FIG. 1 is an application scenario diagram of face image processing according to an embodiment of this application;
FIG. 2 is a schematic diagram of a structure of an electronic device according to an embodiment of this application;
FIG. 3 is a schematic flowchart of a face image processing method according to an embodiment of this application;
FIG. 4 is a flowchart of an eye feature detection step according to an embodiment of this application;
FIG. 5 is a flowchart of a step of calculating eye feature data according to a specific embodiment of this application;
FIG. 6 is a flowchart of an eye adjustment degree determining step according to an embodiment of this application;
FIG. 7 is a flowchart of an adjustment step according to an embodiment of this application;
FIG. 8 is a block diagram of a face image processing apparatus according to an embodiment of this application;
FIG. 9 is a schematic flowchart of a face image processing method according to a specific embodiment of this application;
FIG. 10 is an eye region extraction effect diagram (left) and an eyelid key point correction effect diagram (right) according to the embodiment shown in FIG. 9;
FIG. 11 is an eyeball part mask diagram (left), an iris outline diagram (middle) after thresholding, and an iris edge detection effect diagram (right) according to the embodiment shown in FIG. 9;
FIG. 12 is a schematic diagram of upper and lower eyelid adjustment positions according to the embodiment shown in FIG. 9;
FIG. 13 is an eye white part mask diagram (left) and an eye white compensation effect diagram (right) according to the embodiment shown in FIG. 9;
FIG. 14 is a complete iris synthesized image (left) and a final synthesized eye diagram (right) according to the embodiment shown in FIG. 9;
FIG. 15 is an original diagram (left) and a last corrected effect diagram (right) according to the embodiment shown in FIG. 9;
FIG. 16 is a trigger flowchart of a face image processing method according to an embodiment of this application;
FIG. 17 is a trigger flowchart of a face image processing method according to another embodiment of this application;
FIG. 18 is a block diagram of a device according to some embodiments of this application; and
FIG. 19 is a block diagram of a system on chip (SoC) according to some embodiments of this application.

**DESCRIPTION OF EMBODIMENTS**

The following clearly and completely describes the technical solutions in embodiments of this application with reference to the accompanying drawings in embodiments of this application.

It may be understood that, as used herein, the term "module" may refer to or include an application-specific integrated circuit (ASIC), an electronic circuit, a processor (shared, dedicated, or group) that executes one or more software or firmware programs, and/or a memory, a combinational logic circuit, and/or another suitable hardware component that provides the described functions, or may be part of these hardware components.

It may be understood that, in each embodiment of this application, the processor may be a microprocessor, a digital signal processor, a microcontroller, or the like, and/or any combination thereof. According to another aspect, the processor may be a single-core processor, a multi-core processor, or the like, and/or any combination thereof.

The following further describes embodiments of this application in detail with reference to the accompanying drawings.

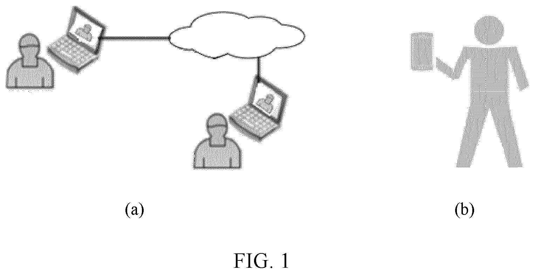

FIG. 1 is an application scenario diagram of face image processing according to an embodiment of this application. (a) in FIG. 1 shows a scenario in which two people use computers to make a video call over a network. In this case, in a video call process, a computer that serves as a terminal device obtains a face image by using a camera, processes the face image based on a face image processing method provided in this application, and transmits a processed image to a computer of a video call object, so that a sight line of the face image displayed on the computer of the video call object is displayed as looking directly at the video call object.

In addition, the technology in this application may be further used in a scenario in which a mobile phone is used to take a selfie, as shown in (b) in FIG. 1. In this case, in a photographing process, a face image is obtained by using a camera of the mobile phone. Thereafter, a processor of the mobile phone performs processing based on the face image processing method of this application, that is, when the processor detects a human eye sight line and detects that a human eye sight line in a photographed picture deviates from facing the front, the processor determines an eye adjustment degree and correspondingly adjusts the human eye sight line to a state of facing the front, and finally outputs a processed face image.

Currently, face adjustment is performed in the following three solutions.

Solution one: Establish a three-dimensional model of a user face, rotate a head angle in a three-dimensional space, and render a rotated three-dimensional model to an image, to obtain a new image after a sight line direction changes. A specific method for establishing a face three-dimensional model, for example, may be: obtaining depth information by using a depth camera and performing three-dimensional reconstruction to obtain the face three-dimensional model (reference: Kuster C, Popa T, Bazin J C, et al. Gaze correction for home video conferencing[J]. ACM Transactions on Graphics (TOG), 2012, 31(6): 174.) based on this, or performing model fitting based on a 3D face base model to obtain the face three-dimensional model (reference: CN105357513B, single-camera eye expression correction method in session video, Tao Xiaoming et al., Tsinghua University, 2015.). However, a disadvantage of this solution is that, when sight line adjustment is performed, a head angle and a sight line direction are actually adjusted simultaneously in a same direction. When the head angle and the sight line direction are inconsistent, a poor effect is obtained, and both a front face angle and a sight line of facing the front cannot be simultaneously obtained, thereby limiting applicability of the method.

Solution two: Establish a three-dimensional model of a user's eye, and rotate an eyeball direction in a three-dimensional space and render it to an image, to obtain a new image after a sight line direction changes. A method for establishing an eye three-dimensional model of a user includes, for example, obtaining depth information by using a depth camera and performing three-dimensional reconstruction based on this to obtain the eye three-dimensional model, or performing model fitting based on a 3D eye base model to obtain the eye three-dimensional model (references: E. Wood, T. Baltrušaitis, L.-P. Morency, P. Robinson, and A. Bulling. Gazedirector: Fully articulated eye gaze redirection in video. In Computer Graphics Forum, volume 37, pages 217-225. Wiley Online Library, 2018. 3.). However, a method for obtaining depth information by using a depth camera and performing three-dimensional reconstruction based on this to obtain the eye three-dimensional model depends on the hardware depth camera, and a method for performing model fitting based on the 3D eye base model to obtain the eye three-dimensional model relies on a base model expression capability, which are often difficult to implement precise reconstruction on various groups of people with various eye shapes; and have relatively low algorithm efficiency (a processing speed of each frame of image is about 80 ms (3.3 Ghz CPU, Nvidia GTX 1080)), and are difficult to meet a real-time video application requirement.

Solution three: Use a method based on eye image replacement. In this method, an eye region in an image is replaced with an eye image that is looking at another direction, so as to implement a sight line correction effect (reference: L. Wolf, Z. Freund, and S. Avidan. An eye for an eye: A single camera gaze-replacement method. In 2010 IEEE Computer Society Conference on Computer Vision and Pattern Recognition, pages 817-824. IEEE, 2010.). However, a disadvantage of the method is that eye images in which a user looks at various angles in different directions need to be collected and stored beforehand, which affects user experience. In addition, changes of scene light and an environment in a usage process of a user are ignored, which causes distortion of a synthesized new image. In addition, how to process an eye blink condition is not considered.

Compared with the solutions in the conventional technology, a face image processing solution provided in a specific implementation in this application is used. In a process of making a video call by using a computer, although a camera is far away from a center of a screen, that is, a position of an eye of a video call object, a processor of the computer can also invoke a face image processing method of this application to perform processing, finally a processed image is displayed on a display screen of a video call object, and a front view image is displayed on the display screen. Alternatively, in a photographing process by using a mobile phone, a processor of the mobile phone invokes the face image processing method in this application to perform processing, and outputs a processed image. In this case, even if the camera deviates from the center of the screen, a person who takes a selfie can obtain a front view image by looking at a mobile phone screen at any angle. Therefore, user experience is greatly improved.

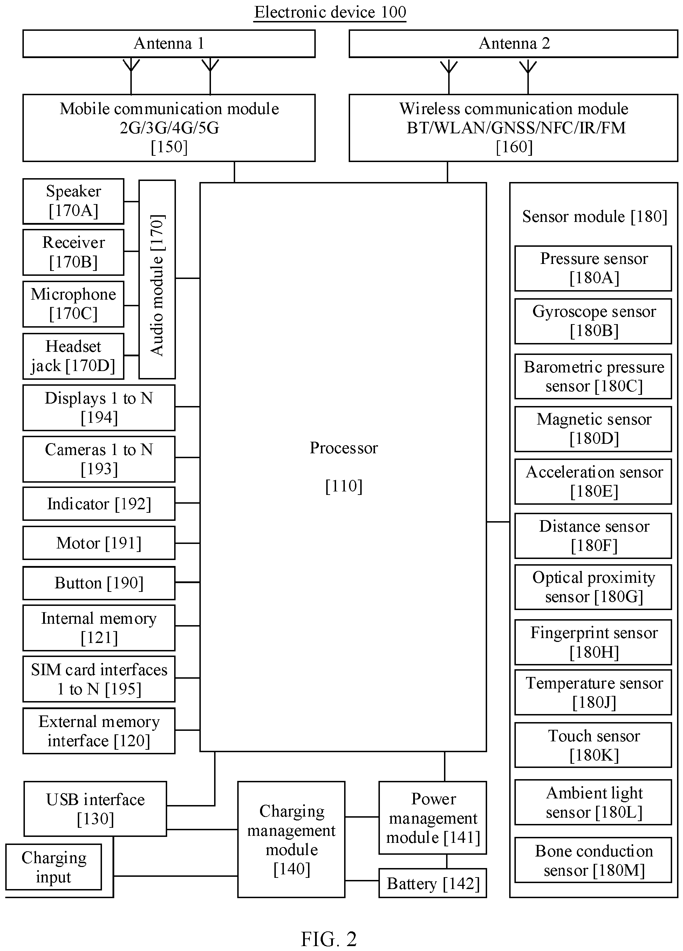

FIG. 2 is a schematic diagram of a structure of an electronic device 100 according to some embodiments of this application. The electronic device 100 may be, for example, a computer, a mobile phone mentioned in the foregoing application scenario of this application, and another device such as an ipad.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The processor 110 may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and a subscriber identification module (subscriber identity module, SIM) interface.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be used for audio communication, and analog signal sampling, quantization, and coding. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like. The GPIO interface may be further configured as the I2C interface, the I2S interface, the UART interface, the MIPI interface, or the like.

It may be understood that an interface connection relationship between the modules that is shown in embodiments of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The electronic device 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to: compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and an address book) and the like that are created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS). The processor 110 runs instructions stored in the internal memory 121 and/or instructions stored in the memory disposed in the processor, to perform various function applications and data processing of the electronic device 100. According to some embodiments of this application, the internal memory 121 stores a set of computer programs (in other words, computer readable code) used to perform face image processing. When reading the program stored in the internal memory 121, the processor 110 performs the face image processing method according to this application, detects and adjusts an eye in the face image, and finally outputs an adjusted face image. For details, refer to the face image processing method in the following embodiments.

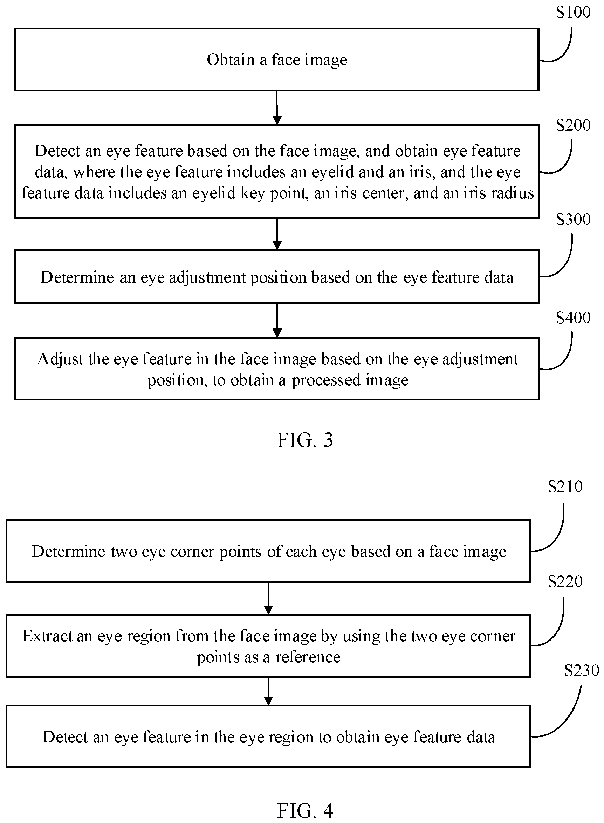

The following describes a face image processing method according to an embodiment of this application with reference to FIG. 3.

FIG. 3 is a schematic flowchart of a face image processing method according to an embodiment of this application.

As shown in FIG. 3, generally, the face image processing method according to this embodiment of this application includes: a face image obtaining step (step S100), an eye feature detection step (step S200), an adjustment degree determining step (step S300), and an eye adjustment step (step S400).

By using a computer making a video call as an example, the following describes details of each of the foregoing steps in more detail one by one.

Step S100: Obtain a face image by using a camera of the computer

When the computer is used to make a video call, once a function of the video call is enabled, the camera configured by the computer is automatically or manually invoked to obtain a face image by using the camera.

Step S200: Detect features of an eyelid and an iris on the face image obtained in step S100, and obtain an eyelid key point, an iris center, and an iris radius that are used as eye feature data.

By using a graphics processing unit (GPU) of the computer, the computer detects an eye feature including the iris on the face image, and obtains the eye feature data including the eyelid key point, the iris center, and the iris radius.

The foregoing uses the eyelid and the iris as examples of eye features for description. There may be a plurality of eye features, such as an iris, an eyelid, and an eye white. These eye features may be obtained in a machine learning model, grayscale processing, or the like. The eyelid and the iris are relatively important eye features for face image processing, and a human sight line may be well reflected based on the eyelid and iris features. Therefore, as important eye feature data, the eyelid key point, the iris center, and the iris radius may be determined.

In step S200, the computer detects and calculates the eye feature data by using the graphics processing unit (GPU) of the computer

Step S200 shown in FIG. 3 further includes the following step of determining an eye corner point (step S210), step of extracting an eye region (step S220), and step of calculating eye feature data (step S230), as shown in FIG. 4.

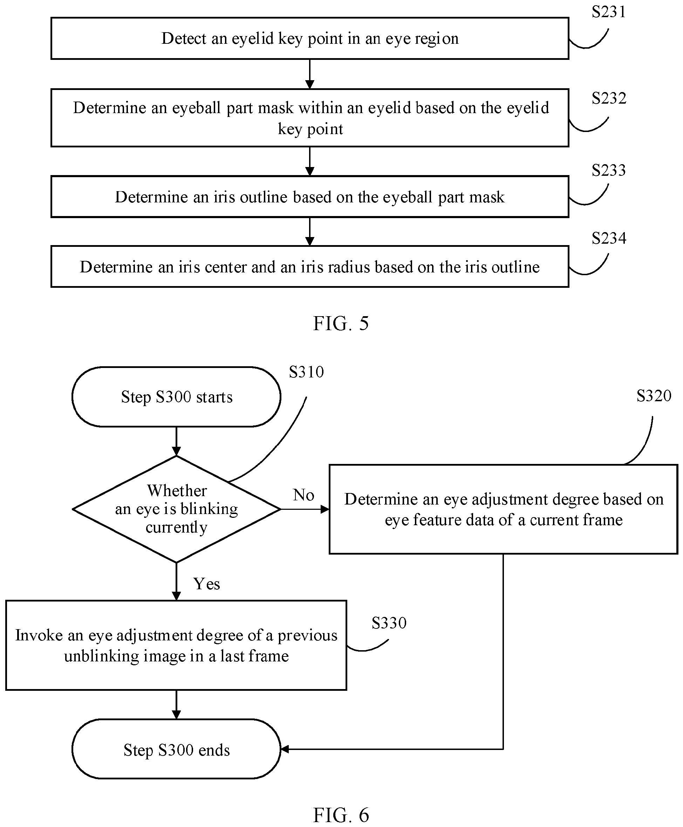

First, the foregoing steps are described in detail with reference to FIG. 4 and FIG. 5.

Step S210: First, determine two eye corner points of each eye based on the obtained face image.

As one of key points of each eye, the two eye corner points have a relatively mature detection technology. For example, an eye corner point may be found on a face image by using a machine learning model, or a transition curve between an eye white and an eyelid may be found based on a relatively large color difference between an eye region and an eyelid region, and then a point on an outermost side of the transition curve is found, that is, an eye corner point.

Step S220: Extract an eye region from the face image by using the two eye corner points as a reference.

The eye region is a region with a specific size and including eyes. Therefore, the eye region can be relatively quickly and accurately obtained.

In a specific embodiment, step S220 may specifically include:

determining an eye image on the face image by using the two eye corner points as a reference; and processing the eye image to an image with a predetermined pixel value to obtain the eye region, where a connection line of the two eye corner points is in a horizontal state.

That is, first, the eye image is determined on the face image based on the two eye corner points.

The two eye corner points are important key points of the eye. If the two eye corner points are determined, a length of the eye is determined, and a width of the eye is less than the length of the eye. Therefore, a region in which the eye is located can be roughly determined by using the two eye corner points. For example, an ellipse or a rectangle may be drawn based on the two eye corner points to enclose the eye, so that an eye image is determined. For example, an ellipse may be drawn by using the two eye corner points, so as to determine an eye image. A length that is 1.5 times a length of a connection line of two eye corner points in one eye is used as a long axis of an ellipse, and a length that is 0.5 times the length of the connection line of the two eye corner points is used as a short axis of the ellipse.

Next, for example, the eye image is placed in an image frame with a fixed size through rotation and scaling, or the eye image may be cut by using a relatively small image frame, so that the eye image is processed into an image with a predetermined pixel.

To facilitate subsequent sight line adjustment on the human eye, the eye image may be first adjusted to a horizontal state, and then the eye image is processed into the image with a predetermined pixel value, so as to obtain the eye region. There are various methods for adjusting the eye image to the horizontal state, for example, eye corner points of each eye may be connected by a line, and the line is processed into a horizontal line by rotating, to obtain that two eye corner points are in a horizontal state. The image with a predetermined pixel value refers to an image with a predetermined size. That is, an image with a specific size is obtained as an eye region by capturing by using the connection line between the two eye corner points, upper and lower frames parallel to the connection line and left and right frames perpendicular to the connection line. Therefore, an adjustment degree may be calculated only in the eye region and adjustment is performed based on this. Therefore, a calculation amount can be greatly reduced, and real-time adjustment can be made more smoothly.

Step S230: Detect the eye feature in the eye region to obtain the eye feature data.

That is, after the eye region is extracted, the eyelid and the iris are detected in the eye region, and the eye feature data (the eyelid key point, the iris center, and the iris radius) is calculated. Thereafter, how to adjust a human eye sight line may be determined based on the eye feature data.

Next, the step of calculating the eye feature data is described in detail.

As shown in FIG. 5, the step of calculating the eye feature data may specifically include: a step of detecting an eyelid key point (step S231), a step of determining an eyeball part mask (step S232), a step of determining an iris outline (step S233), and a step of determining the iris center and iris radius (step S234).

The following describes in detail each of the foregoing specific steps of the step (step S230) of calculating the eye feature data.

Step S231: Detect the eyelid key point in the eye region.

An eyelid key point extraction technology is mature and is not described in detail herein. For example, the eyelid key point may be extracted by using a DLIB model (a common face key point detection model).

Step S232: Determine the eyeball part mask within the eyelid based on the eyelid key point.

That is, the eyeball part mask within the eyelid is obtained by fitting the eyelid key point.

In a specific example, step S222 may include:

(a): Fit upper and lower eyelid curves based on the eyelid key point by using a quadratic function.
That is, the eyelid key point may be fitted by using a quadratic function, so as to form an eyelid curve. For example, the eyelid key point may be fitted by using a quadratic function of an ellipse or superimposition of quadratic functions of two parabolas.
(b): Correct an eyelid key point deviating from the upper and lower eyelid curves.
For example, a distance from the eyelid key point to an eyelid curve may be calculated, and a distance threshold may be set. When a distance from a key point to the eyelid curve exceeds the threshold, the key point may be moved, so that the key point falls into the distance threshold, and some more key points may be set on the eyelid curve, so that more dense key point distribution may be formed.
(c): Determine the eyeball part mask within the eyelid after the eyelid key point is corrected.
Specifically, a corrected eyelid key point may be connected by a line, so as to form a closed image, and an image in the closed image is extracted, so that the eyeball part mask within the eyelid is determined.

Step S233: After the eyeball part mask is determined, determine an iris outline based on the eyeball part mask.

That is, the eyeball part mask is processed to determine the iris outline.

For example, the mask is processed based on a color difference between the iris and a non-iris region in the mask, where the iris region is relatively dark, and a color in the non-iris region is relatively light, so that the iris region is obtained, and a boundary of the iris region is the iris outline.

In a specific example, step S233 may include:

(a) Perform brightness equalization to adjust a grayscale value of the eyeball part mask to obtain a grayscale map with predetermined brightness.
For example, a mask grayscale value is adjusted by using a brightness equalization method to obtain a grayscale map of an eye region with standard brightness.
(b) Perform thresholding processing on the grayscale map to obtain the iris outline after thresholding.
For example, a predetermined threshold may be set for a grayscale value or a brightness value of the grayscale map, and a part that is not in a predetermined threshold range of the iris is filtered off, so as to obtain the iris outline after thresholding.

During thresholding processing, a morphological opening operation may be used to eliminate a small object (a raw edge or the like), so as to obtain a more accurate iris outline.

Step S234: Determine the iris center and the iris radius based on the iris outline.

That is, the iris center and the iris radius are calculated by using the iris outline. Generally, a horizontal position of the iris within the eyelid is complete, a vertical position of the iris is partly shielded by the eyelid, and the iris outline may be fitted based on a horizontal part of the iris outline, so as to calculate the iris center and the iris radius.

In a specific example, step S234 may include:
performing ellipse fitting on the iris outline after thresholding, using a center of an ellipse obtained by fitting as the iris center, and using a semi-major axis of the ellipse as the iris radius.

Because a horizontal part of the iris is not shielded and is complete, ellipse fitting is performed by using the horizontal part, so that the center of the ellipse of the iris outline obtained by fitting is the iris center, and the semi-major axis of the ellipse of the iris outline obtained by fitting is the iris radius.

After the eye feature data is calculated, an eye adjustment degree needs to be determined, that is, a specific extent to which the current eye feature needs to be adjusted needs to be determined. The following describes in detail determining steps of the eye adjustment degree with reference to FIG. 3 and FIG. 6.

As shown in FIG. 3, a specific implementation process of the step (step S300) of determining an eye adjustment degree based on the eye feature data according to some embodiments of this application includes steps shown in FIG. 6.

Step S310: Determine, based on the eye feature data, whether the eye is blinking currently.

Because an eye adjustment position when blinking is different from an eye adjustment degree when not blinking, to more properly determine the eye adjustment degree, first, it is determined, based on the eye feature data, whether the eye is blinking currently.

When it is determined that the eye is not blinking currently, step S320 is performed, that is, the eye adjustment degree is determined based on the eye feature data of the face image of the current frame.

When it is determined that the eye is blinking currently, step S330 is performed, that is, the eye adjustment degree of a previous unblinking image in the last frame is invoked.

That is, if the eye is blinking currently, to consider continuity of a video image, and to reduce a calculation amount and improve image quality, the eye adjustment degree of the previous unblinking image in the last frame is directly invoked.

About how to determine whether the eye is blinking currently, the following operations may be performed: calculating a ratio of an iris exposed part to an iris circle based on the iris outline after thresholding to obtain an iris ratio; calculating an eye aspect ratio based on the eyelid key point; and determining, based on the iris ratio and the eye aspect ratio, whether the eye is blinking currently.

For example, an area of an image surrounded by the iris outline may be calculated based on the iris outline, and an iris circle area ($\pi R^2$) is calculated based on the iris radius (R), so that the iris ratio = the area of the image surrounded by the iris outline/the iris circle area. In addition, ellipse fitting may be performed on the eyelid key point, and a short-axis length or a long-axis length of the ellipse is an aspect ratio of an eye corner. It may be determined that when the iris ratio is less than a predetermined iris ratio and the eye aspect ratio is less than a predetermined eye aspect ratio, the eye is blinking.

According to some embodiments of this application, step S320 includes an iris center adjustment position determining step and an eyelid adjustment position determining step.

The iris center adjustment position determining step is determining an iris center adjustment position based on the two eye corner points.

For example, a position at which a connection line center of the two eye corner points moves downward in a vertical direction by a predetermined distance (or may be understood as that an image moves downward in a vertical direction by a predetermined pixel) may be calculated, and is determined as the iris center adjustment position. The so-called "predetermined distance" may be obtained by collecting a face front view image and performing machine learning, or may be set based on experience.

To eliminate impact of abnormal data, smoothing processing may be performed by using a plurality of frames of iris positions. For example, an actual value of an iris center adjustment position of a current frame of smoothing processing = an iris center adjustment position of a previous frame * 40% + a calculation value of the iris center adjustment position of the current frame * 60%.

The eyelid adjustment position determining step is determining an eyelid adjustment position based on the iris center adjustment position, where the eyelid adjustment position includes an upper eyelid highest point adjustment position and a lower eyelid lowest point adjustment position. For example, the upper eyelid highest point adjustment position may be a point that is 4/5R-L away from the iris center in the vertical direction, where R is the iris radius, L may be a value that has a relatively good effect after a plurality of times of tests, and the lower eyelid lowest point adjustment position may be a point that is L away from a lowest point position of the iris circle in the vertical direction.

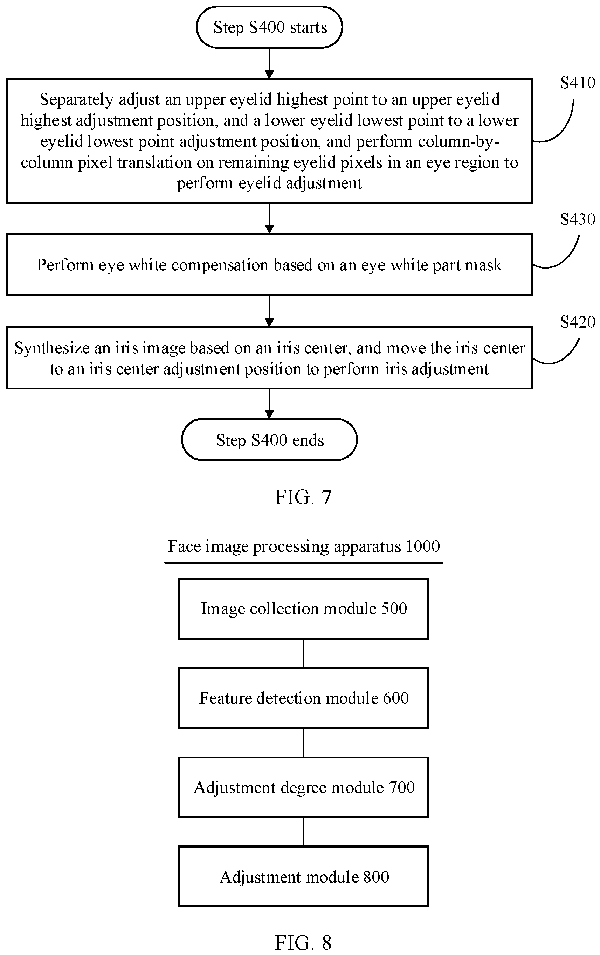

After the eye adjustment degree is determined, the eye feature is adjusted based on the eye adjustment degree, that is, the eye adjustment step S400 is performed. The following describes this step in detail with reference to FIG. 7.

That is, the eye feature is adjusted based on an adjustment position of the eye feature, which may be performed in a manner of translation, scaling, rotation, or the like.

Further, referring to FIG. 7, step S400 may include an eyelid adjustment step (step S410) and an iris adjustment step (step S420).

Specifically, as shown in FIG. 7, step S410 may include: separately adjusting an upper eyelid highest point to the upper eyelid highest adjustment position, adjusting a lower eyelid lowest point to the lower eyelid lowest point adjustment position, and performing column-by-column pixel translation on remaining eyelid pixels in the eye region, to perform eyelid adjustment.

For example, the upper eyelid highest point may be adjusted to the upper eyelid highest adjustment position in a translation manner, the lower eyelid lowest point is adjusted to the lower eyelid lowest point adjustment position, and column-by-column translation is performed on the remaining eyelid pixels based on a designed curve function that conforms to a real eyelid movement rule and shape.

Column-by-column pixel translation is performed in a middle predetermined range in the eye region, and after pixel translation, a gap generated after translation may be further filled by scaling based on a region outside the predetermined range in the eye region.

For example, in a column-by-column pixel translation process, pixels of a specific width may be reserved without performing pixel translation. After translation ends, the pixels of a specific width reserved previously are scaled, so as to fill the gap. In this way, sense of fragmentation caused by that a processed eye region image is pasted back to an original image can be prevented, so that an eyelid adjustment effect is better.

Step S420 may include: synthesizing an iris image based on the iris center, and moving the iris center to the iris center adjustment position to perform iris adjustment. That is, the iris image is synthesized based on the iris center and the iris radius that are obtained through calculation by the current frame. Then, the iris center is moved to the iris center adjustment position determined in the step of the eye adjustment degree, that is, iris adjustment is completed.

According to some embodiments of this application, the eye adjustment step S400 may further include an eye white compensation step S430 after the eyelid adjustment step and before the iris adjustment step.

Specifically, after the iris outline after thresholding is obtained, an eye white part mask is further obtained based on the eyeball part mask and the iris outline after thresholding. In step S430, eye white compensation is performed based on the eye white part mask.

According to some embodiments of this application, after the obtaining the face image, and before the detecting the eye feature, eye white compensation further includes:

obtaining head feature data based on the face image;
determining a head rotation angle based on the head feature data, and performing rotation processing on the face image based on the head rotation angle; and
after rotation processing, detecting the eye feature based on the face image after rotation processing, to obtain the eye feature data.

In this way, both a face and an eye feature are adjusted, so that video communication between two parties can be more natural; and a case in which users cannot naturally communicate with each other in a video call or cannot naturally take a photo due to face tilts caused by that the users look at a screen of a terminal device due to a display position can be avoided.

The following describes a face image processing apparatus 1000 according to an embodiment of this application with reference to FIG. 8.

As shown in FIG. 8, the face image processing apparatus 1000 according to an embodiment of this application includes an image collection module 500, a feature detection module 600, an adjustment degree determining module 700, and an adjustment module 800.

The image collection module 500 is configured to obtain a face image. The image collection module may be, for example, an image sensor in a mobile phone.

The feature detection module 600 is configured to detect an eye feature based on the face image, and obtain eye feature data, where the eye feature includes an eyelid and an iris, and the eye feature data includes an eyelid key point, an iris center, and an iris radius.

The adjustment degree determining module 700 is configured to determine an eye adjustment degree based on the eye feature data.

The adjustment module 800 is configured to adjust the eye feature in the face image based on the eye feature data to obtain a processed image.

The feature detection module 600 may further include an eye corner point determining module, an eye region extraction module, and an eye feature data calculation module. The eye corner point determining module is configured to determine two eye corner points of each eye based on the face image. The eye region extraction module is configured to extract an eye region from the face image by using the two eye corner points as a reference. The eye feature data calculation module is configured to detect the eye feature in the eye region to obtain the eye feature data.

The adjustment degree determining module 700 may further include an eye blink determining module and an adjustment degree obtaining module. The eye blink determining module is configured to determine, based on the eye feature data, whether the eye is blinking currently. The adjustment degree obtaining module is configured to: when it is determined that the eye is not blinking, determine the eye adjustment degree based on the eye feature data of the face image of a current frame, where the eye adjustment degree includes an eyelid adjustment position and an iris center adjustment position; and when it is determined that the eye is blinking currently, invoke the eye adjustment degree of a previous unblinking image in the last frame.

The adjustment module 800 may further include an eyelid adjustment module and an iris adjustment module. The eyelid adjustment module is configured to: separately adjust an upper eyelid highest point to the upper eyelid highest adjustment position, adjust a lower eyelid lowest point to the lower eyelid lowest point adjustment position, and perform column-by-column pixel translation on remaining eyelid pixels in the eye region, to perform eyelid adjustment. The iris adjustment module is configured to: synthesize an iris image based on the iris center, and move the iris center to the iris center adjustment position. The adjustment module 800 may further include an eye white compensation module configured to perform eye white compensation based on an eye white part mask after eyelid adjustment.

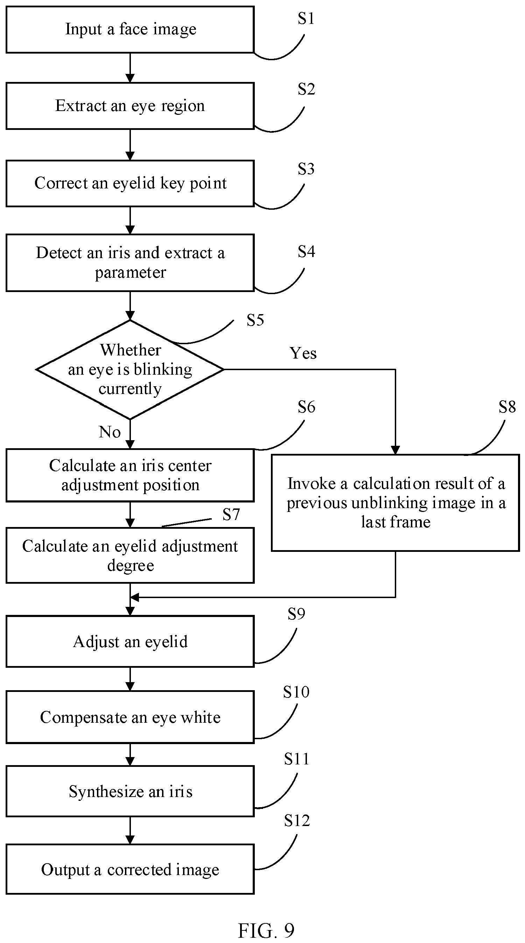

The following describes in detail the face image processing method with reference to specific embodiments with reference to FIG. 9 to FIG. 15.

FIG. 9 is a schematic flowchart of face image processing according to a specific embodiment of this application.

Step S1: Input a face image. For example, a terminal device enables video software or photographing software, and invokes a camera to shoot a face image.

Step S2: Extract an eye region.

First, an eye image is captured based on two eye corner points of each eye. For example, a captured width is twice as long as a distance between the two eye corner points, and a height equals the width * 0.48.

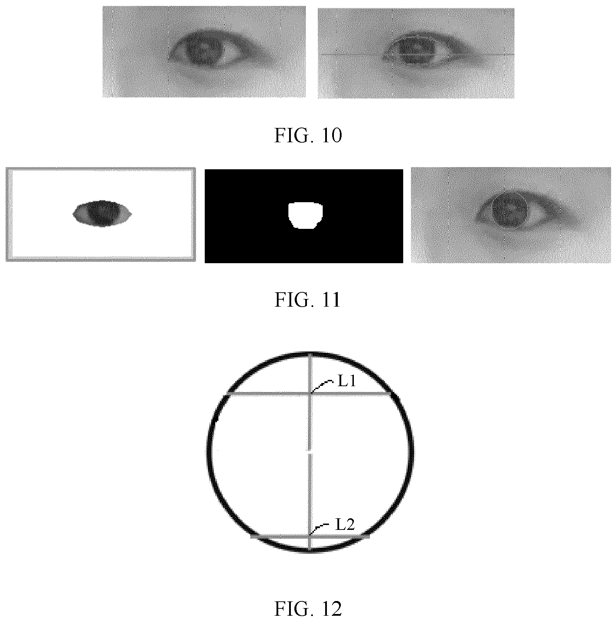

Then, the eye image is rotated and/or scaled to an image with a fixed size, for example, 200*96 pixels, an eye is in the middle, a connection line of the two eye corner points is in a horizontal state, and an extracted region is shown in a left figure in FIG. 10.

Input feature point sets are correspondingly changed to an eye region image.

Step S3: Correct an eyelid key point.

Optimization is performed based on a known eyelid key point by using a quadratic function fitting method. Upper and lower eyelid curves are fitted to correct key points deviating curves, and extract more dense key point distribution, as shown in a right figure in FIG. 10.

Step S4: Detect an iris and extract a parameter

An eyeball part mask within an eyelid is obtained based on an optimized eyelid key point, as shown in a left figure in FIG. 11.

Thereafter, a mask grayscale value is adjusted by using a brightness equalization method to obtain a grayscale map of an eye region with standard brightness.

Thresholding processing is performed, and small objects are eliminated by using a morphological opening operation, to obtain an iris part outline after thresholding, as shown in a middle figure in FIG. 11.

Finally, the iris part outline is fitted by using an ellipse, an obtained ellipse center is used as an iris center, and an obtained semi-major axis of the ellipse is used as an iris radius. The fitted iris edge is shown in a circle of the eyeball edge in a right figure in FIG. 11. To improve stability, radiuses of a plurality of frames of the iris can be continuously counted, and an average value of the radiuses is used as a standard iris radius.

Step S5: Detect whether an eye is blinking currently.

Specifically, the following steps are used to determine whether the eye is blinking currently:

calculating a ratio of an iris exposed part to an iris circle, that is, an iris ratio;
calculating an eye aspect ratio based on upper and lower eyelid key points; and
when the iris ratio is less than X and the eye aspect ratio is less than Y, determining that the eye is blinking currently.

If it is determined that the eye is not blinking, the iris center adjustment position and the eyelid adjustment degree are calculated. If it is determined that the eye is blinking, an unblinking image in a previous frame is calculated. An eyelid adjustment range is consistent with the eyelid adjustment range of a previous frame in which the eye is not blinking, and the iris center adjustment position also refers to the previous frame.

If it is determined that the eye is not blinking, steps S6 and S7 are performed, and then step S9 is performed to perform eyelid adjustment. If it is determined that the eye is blinking, step S8 is performed, and thereafter, step S9 is performed to perform eyelid adjustment. In the following, steps S6, S7, and S8 are first described in detail.

Step S6: Calculate the iris center adjustment position: Calculate a position of M pixels below a connection line center of two eye corners in a vertical direction, where the position is a position to which the iris center needs to be adjusted, and M is an empirical value. To eliminate impact of abnormal data, smoothing processing may be performed by using a plurality of frames of iris positions. For example, an actual adjustment position of a current frame = an actual adjustment position of a previous frame * 40% + a calculated adjustment position of the current frame * 60%.

Step S7: Calculate an eyelid adjustment degree.

As shown in FIG. 12, a position L1 to which an upper eyelid highest point is adjusted needs to be fixed to a position that is (4/5R-D) away from the iris center, and a position L2 to which a lower eyelid lowest point is adjusted needs to be fixed to a position that is D away from a bottom of the iris circle, where D is an empirical value, and R is an iris radius. To eliminate impact of abnormal data, smoothing processing may also be performed on the upper and lower eyelid adjustment positions by using a plurality of frames of information.

Step S8: Invoke a calculation result of a previous unblinking image in the last frame, that is, invoke an eye adjustment degree obtained by calculating an unblinking image in the last frame before a current frame. Thereafter, step S9 and the like are performed by using the invoked calculation result.

Step S9: Adjust an eyelid.

An upper eyelid and a lower eyelid are adjusted in a manner of column-by-column pixel translation and scaling based on an upper eyelid highest point and a lower eyelid lowest point position determined in the "sight line adjustment degree calculation" by using a curve function that conforms to a real eyelid movement rule and shape. A specific step is as follows:

A movement rule of the upper eyelid conforms to a form of a conic curve. The conic curve $f_{up}(x)$, ($x \in [0, \pi]$) is defined, pixel coordinates of the eye region image are mapped to a value space of the conic curve $f_{up}(x)$ according to a function $G(\cdot)$, and formulas are shown in the following formula (1) and formula (2), where W represents a horizontal width of an eye image, and i represents an ith column of pixels.

$$f_{up}(x) = \frac{(x-\frac{\pi}{2})^2}{\frac{\pi^2}{4}} + y^2 - 1, \ (x \in [0, \pi]) \tag{1}$$

$$G(i) = \begin{cases} \dfrac{i}{0.35w} * \dfrac{\pi}{2}, \ (i \in [0, 0.35W]) \\ \dfrac{W-i}{W-0.35w} * \dfrac{\pi}{2}, \ (i \in [0.35W, W]) \end{cases} \tag{2}$$

If a sight line adjustment degree (that is, a moving distance of an upper eyelid highest point) is F, a moving distance of each column is finally $F_i = F * f_{up}(G(i))$.

In addition, to prevent sense of fragmentation caused by that a processed eye region image is pasted back to an original image, a specific width $w_{save}$ needs to be reserved around the eye region image, and pixels do not participate in pixel translation processing.

If a height of the eye region image is H, a gap with a width $H - F_i - w_{save}$ will be generated after each column of pixels moves. A pixel of a reserved width in a translation process of an upper eyelid is scaled and is adjusted to a width $H - F_i$ to fill the gap generated in the translation process.

An eyelid motion curve function $f_{down}(x)$ used by a lower eyelid and a pixel coordinate mapping function $G(i)$ are shown in the following formula (3):

$$f_{down}(x) = \sin(x) \quad G(i) = \frac{i}{w} * \pi \tag{3}$$

Similar to upper eyelid adjustment, a lower eyelid pixel is translated and scaled based on a sight line adjustment degree of the lower eyelid, so as to complete adjustment.

Step S10: Compensate an eye white.

An eye white part mask is obtained based on an obtained eyeball part mask and an obtained iris outline after thresholding, and horizontal stretching is performed on a pixel of an eye white region to cover an iris color

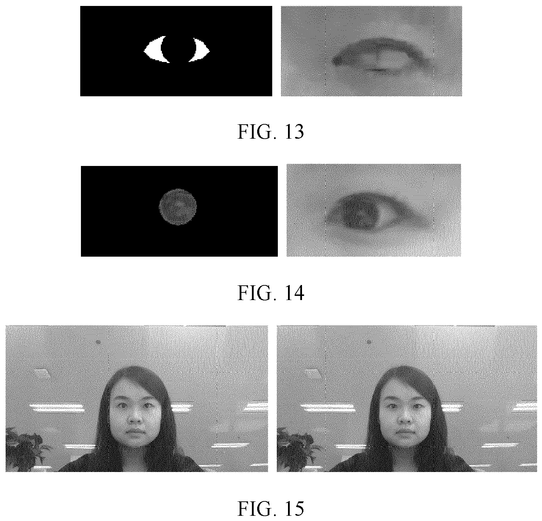

This is because iris adjustment involves adjustment of an iris position and an exposed area, and a method needs to be used to cover an original iris part and preserve an original eye white texture. The eye white part mask is shown in a left figure in FIG. 13, and an eye white compensation example is shown in a right figure in FIG. 13.

Step S11: Synthesize an iris.

When an eye is normally opened, only a part of the iris is visible due to shielding by the eyelid. In a sight line correction process, an eyelid-shielded part in the original image needs to be synthesized, so as to ensure authenticity of the image when an iris exposed region changes. A specific method is as follows:

An iris region obtained by thresholding is rotated around an iris center, and interpolation superposition is continuously performed until a relatively complete iris image is synthesized, as shown in a left figure in FIG. 14.

A synthesized iris is placed at the iris position obtained in the "sight line adjustment degree calculation", as shown in a right figure in FIG. 14.

Step S12: Finally, output a corrected effect diagram, as shown in a right figure in FIG. 15. Compared with an original image, that is, a left image in FIG. 15, a human eye sight line in a face image is corrected in real time, so that an image in which a sight line is upward in the original image is corrected to an image in which the sight line faces the front, and a corrected image is output to a computer of the other party involved to make a video call. Therefore, in a video call process, communication between two parties can be more natural.

In this face image processing method, a real and natural sight line correction effect can be achieved by using comprehensive and fine eye feature extraction, eyelid adjustment based on an eyelid motion curve, realistic iris synthesis, eyeball adjustment, and separate processing on blinking and unblinking images. Compared with the conventional technology, advantages of the method include:

Support from special hardware such as a depth camera is not required; a running speed is fast, and in a test environment of OS (win 10 64 bits), CPU (Core i7-6700), and RAM (8 GB), it takes 13 ms to process one frame of image separately; the method does not depend on head rotation, can separately adjust a sight line, has a relatively wide application range, and can be used in combination with a head rotation technology; and a user picture does not need to be pre-stored, and massive training data does not need to be obtained.

In the following, a video call method that uses the face image processing method of this application is described in detail with reference to a specific embodiment.

When a video call is made by using the face image processing method in this application, face image processing may be performed by starting a sight line correction function when the video call is enabled or during the video call, and a processed image is output to a terminal device of a video call object. The sight line correction function may be enabled by using a switch option preset in video call software, or may be enabled by using an option in a sight line correction selection interface in a video call application.

According to a specific embodiment of this application, the video call method includes:

(1) Enable a video call application. For example, a person opens a mobile phone to enable a video call application, so as to make a video call.

(2) Detect whether a sight line of a person in the video call faces the front. If it is determined that the sight line of the person in the video call faces the front, a video call interface is directly entered.

If it is determined that the sight line of the person in the video call does not face the front, a sight line correction confirmation option appears in the terminal device. For example, a mobile phone processor makes a pop-up window with yes and no options pop up on a screen.

(3) A user chooses whether to perform sight line correction. For example, the person touches with a hand the pop-up window with yes and no options popping up on the screen of the mobile phone.

When the user selects the sight line correction function, the sight line correction function is enabled, that is, the processor of the mobile phone invokes a program of the face image processing method in this application to perform sight line correction.

When the user does not select the sight line correction function, the sight line correction function is not to be enabled.

In this way, a user's intention to use the sight line correction function in each video call can be met, thereby increasing user autonomy.

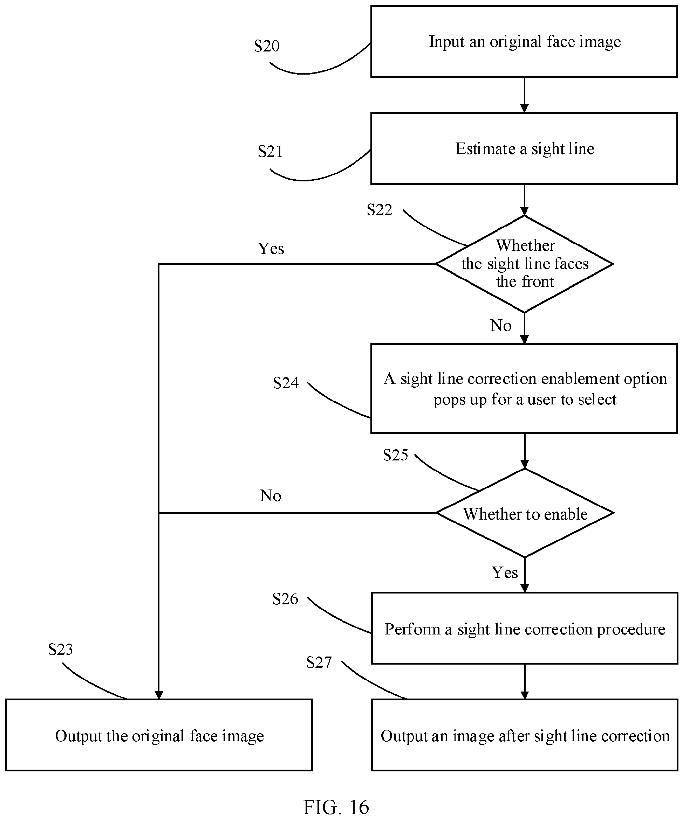

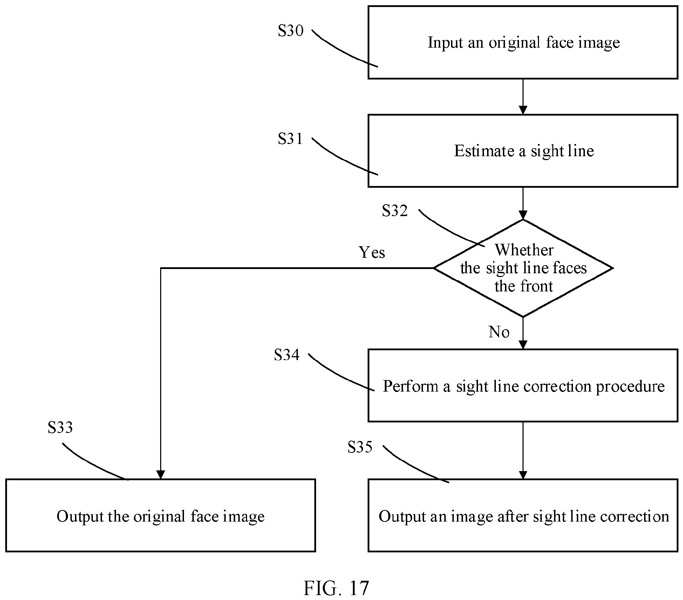

The following describes a triggering process of a face image processing method according to an embodiment of this application with reference to FIG. 16 and FIG. 17.

As shown in FIG. 16, a triggering procedure of a face image processing method includes:

Step S20: Input an original face image. For example, a video call function is enabled by using a computer, so that a camera is triggered to shoot a face image.

Step S21: Estimate a sight line. That is, a processor detects a human eye sight line in the original face image.

Step S22: Determine whether the sight line faces the front. That is, based on a detection result, the processor further determines whether the sight line is in a state of facing the front.

If it is determined that the sight line is in the state of facing the front, step S23 is performed, that is, the original face image is output. If it is determined that the sight line is not in the state of facing the front, step S24 is performed.

Step S24: When it is detected that the sight line is not in the state of facing the front, a sight line correction enablement option pops up on a computer screen for a user to select.

Step S25: The user chooses whether to enable sight line correction. When the user chooses not to enable sight line correction, step S23 is performed, that is, the original face image is output. If the user chooses to enable sight line correction, step S26 is entered, that is, a next step is performed to perform sight line correction.

Step S26: A computer performs a sight line correction procedure, that is, the face image processing procedure provided in this application.

Step S27: Output an image after sight line correction.

It should be noted that, in addition to the foregoing method, in a case of manually triggering sight line correction, a sight line correction function may be enabled or disabled by using a sight line correction option preset in settings of a video call application at the beginning of starting a video call function.

In addition, FIG. 17 shows another triggering process, that is, when it is determined that a sight line is not facing the front, a sight line correction process is automatically started, and finally an image after sight line correction is output. The method includes the following steps:

Step S30: Input an original face image.

Step S31: Estimate a sight line.

Step S32: Determine whether the sight line faces the front.

When it is determined that the sight line faces the front, step S33 is performed to output the original face image.

When it is determined that the sight line does not face the front, step S34 is performed, that is, the sight line correction procedure is automatically started, that is, the face image processing procedure provided in this application. After the processing ends, step S35 is performed to output an image after sight line correction.

In addition, this application further provides a computer program product. When the computer program runs, the face image processing method in the foregoing embodiment can be implemented.

Further, this application further provides a computer readable storage medium. The computer readable storage medium stores a computer program. When the computer program runs, the face image processing method in the foregoing embodiment can be implemented.

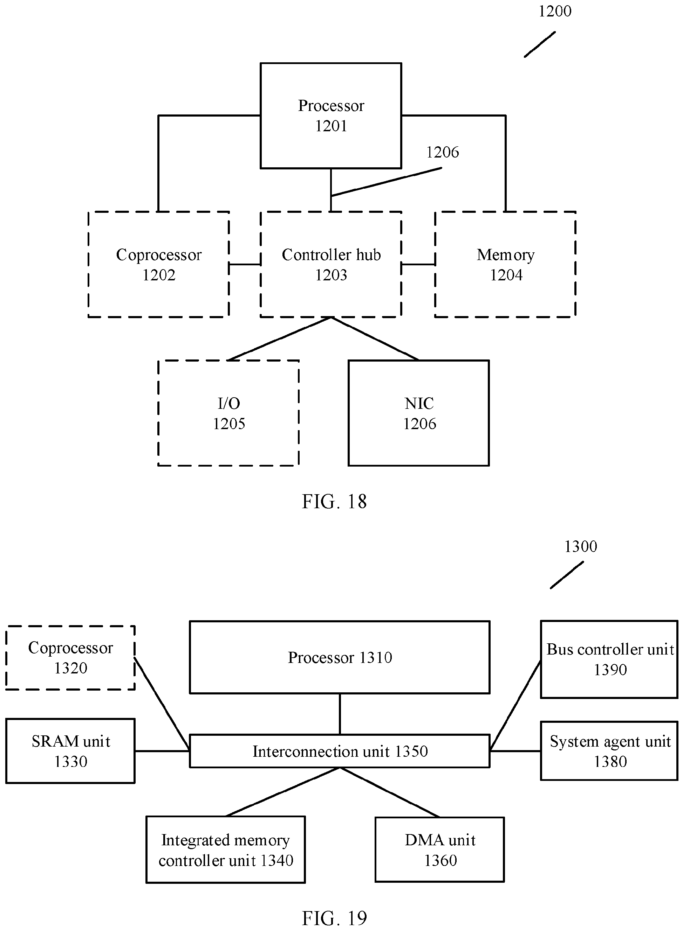

The following describes a device 1200 in an embodiment of this application with reference to FIG. 18. FIG. 18 is a block diagram of a device 1200 according to an embodiment of this application. The device 1200 may include one or more processors 1201 coupled to a controller hub 1203. For at least one embodiment, the controller hub 1203 communicates with the processor 1201 via a multi-branch bus such as a front side bus (Front Side Bus, FSB), a point-to-point interface such as a quick path interconnect (Quick Path Interconnect, QPI), or a similar connection 1206. The processor 1201 executes an instruction for controlling a data processing operation of a general type. In an embodiment, the controller hub 1203 includes, but is not limited to, a graphics memory controller hub (Graphics Memory Controller Hub, GMCH) (not shown) and an input output hub (Input Output Hub, IOH) (which may be on separate chips) (not shown), where the GMCH includes a memory and a graphics controller and is coupled to the IOH.

The device 1200 may further include a coprocessor 1202 and a memory 1204 that are coupled to the controller hub 1203. Alternatively, one or both of the memory and the GMCH may be integrated into the processor (as described in this application), the memory 1204 and the coprocessor 1202 are directly coupled to the processor 1201 and the controller hub 1203, and the controller hub 1203 and the IOH are in a single chip. The memory 1204 may be, for example, a dynamic random access memory (Dynamic Random Access Memory, DRAM), a phase change memory (Phase Change Memory, PCM), or a combination thereof. In an embodiment, the coprocessor 1202 is a dedicated processor, such as a high-throughput many integrated core (Many Integrated Core, MIC) processor, a network or communication processor, a compression engine, a graphics processor, a general purpose computing on GPU (General Purpose Computing on GPU, GPGPU), or an embedded processor. An optional property of the coprocessor 1202 is represented by a dashed line in FIG. 18.

As a computer readable storage medium, the memory 1204 may include one or more tangible, non-temporary computer readable media configured to store data and/or instructions. For example, the memory 1204 may include any suitable non-volatile memory such as a flash memory and/or any suitable non-volatile memory device, such as one or more hard-disk drives (Hard-Disk Drive, HDD (s)), one or more compact disc (Compact Disc, CD) drives, and/or one or more digital versatile disc (Digital Versatile Disc, DVD) drives.

In an embodiment, the device 1200 may further include a network interface(Network Interface Controller, NIC) 1206. The network interface 1206 may include a transceiver configured to provide a radio interface for the device 1200 to communicate with any other suitable device (for example, a front-end module or an antenna). In various embodiments, the network interface 1206 may be integrated with other components of the device 1200. The network interface controller 1206 may implement a function of a communication unit in the foregoing embodiment.

The device 1200 may further include an input/output (Input/Output, I/O) device 1205. The I/O 1205 may include: a user interface, and this design enables a user to interact with the device 1200; a design of a peripheral component interface, making a peripheral component also interact with the device 1200; and/or a sensor design, configured to determine an environmental condition and/or position information related to the device 1200.

It should be noted that FIG. 18 is merely an example. That is, although FIG. 18 shows that the device 1200 includes a plurality of components such as the processor 1201, the controller hub 1203, and the memory 1204, in actual application, the device used in the methods in this application may include only a part of the components of the device 1200, for example, may include only the processor 1201 and the NIC 1206. Properties of selectable devices in FIG. 18 are shown in dashed lines.

According to some embodiments of this application, as a computer readable storage medium, the memory 1204 stores instructions. When the instructions are executed on a computer, the system 1200 executes an image texture enhancement method according to the foregoing embodiment. For details, refer to the method in the foregoing embodiment. Details are not described herein again.

FIG. 19 is a block diagram of a SoC (System on Chip, System on Chip) 1300 according to an embodiment of this application. In FIG. 19, similar components have same reference numerals. In addition, a dashed line frame is an optional feature of a more advanced SoC. In FIG. 19, the SoC 1300 includes: an interconnection unit 1350 which is coupled to an application processor 1310; a system agent unit 1380; a bus controller unit 1390; an integrated memory controller unit 1340; a group or one or more coprocessors 1320 that may include integrated graphics logic, an image processor, an audio processor, and a video processor; a static random access memory (Static Random Access Memory, SRAM) unit 1330; and a direct memory access (DMA) unit 1360. In an embodiment, the coprocessor 1320 includes a dedicated processor such as a network or communication processor, a compression engine, a GPGPU, a high-throughput MIC processor, or an embedded processor

The static random access memory (SRAM) unit 1330 may include one or more computer readable media configured to store data and/or instructions. The computer readable storage medium may store instructions, and specifically, may store temporary and permanent copies of the instructions. The instructions may include: when being executed by at least one unit in the processor, enabling the SoC 1300 to execute a calculation method according to the foregoing embodiment. For details, references may be made to the method in the foregoing embodiment. Details are not described herein again.

Embodiments of the mechanisms disclosed in this application may be implemented in hardware, software, firmware, or a combination of these implementation methods. The embodiment of this application may be implemented as a computer program or program code executed on a programmable system. The programmable system includes at least one processor, a storage system (including a volatile and non-volatile memory and/or a storage element), at least one input device, and at least one output device.

The program code may be applied to an input instruction to execute functions described in this application and generate output information. The output information may be applied to one or more output devices in a known manner. For the purposes of this application, a processing system includes any system with a processor such as a digital signal processor (Digital Signal Processor, DSP), a microcontroller, an application specific integrated circuit (Application Specific Integrated Circuit, ASIC), or a microprocessor.

The program code may be implemented in an advanced procedural language or an object-oriented programming language to communicate with the processing system. The program code may alternatively be implemented in an assembly language or a machine language when required. Actually, the mechanisms described in this application are not limited to a scope of any specific programming language. In any case, the language may be a compiled language or an interpretive language.

In some cases, the disclosed embodiments may be implemented in hardware, firmware, software, or any combination thereof. The disclosed embodiments may alternatively be implemented as instructions carried or stored on one or more temporary or non-temporary machine readable (for example, computer readable) storage media that may be read and executed by one or more processors. For example, the instructions may be distributed over a network or through another computer readable medium. Thus, a machine readable medium may include any mechanism for storing or transmitting information in a form readable by a machine (for example, a computer), including but not limited to a floppy disk, a compact disc, an optical disc, a compact disc read only memory (Compact Disc Read Only Memory, CD-ROMs), a magneto-optical disc, a read only memory (Read Only Memory, ROM), a random access memory (RAM), an erasable programmable read only memory (Erasable Programmable Read Only Memory, EPROM), an electrically erasable programmable read only memory (Electrically Erasable Programmable Read Only Memory, EEPROM), a magnetic card or an optical card, a flash memory, or a tangible machine readable memory for transmitting information (for example, a carrier, an infrared signal, or a digital signal) by using a propagation signal in a way of electricity, light, sound, or the like by using the Internet. Thus, the machine readable medium includes any type of machine readable medium suitable for storing or transmitting electronic instructions or information in a form readable by a machine (for example, a computer).

In the accompanying drawings, some structural or method features may be shown in a particular arrangement and/or sequence. However, it should be understood that such specific arrangements and/or sorting may not be required. Instead, in some embodiments, these features may be arranged in a different manner and/or in a different order from that shown in the accompanying drawings of the specification. In addition, including structural or method features in a specific figure does not imply that such features are required in all embodiments, and in some embodiments, these features may not be included or may be combined with other features.

It should be noted that all the units/modules mentioned in the device embodiments of this application are logical units/modules. Physically, one logical unit/module may be one physical unit/module, or may be part of one physical unit/module, or may be implemented by a combination of a plurality of physical units/modules. A physical implementation of these logical units/modules is not most important, and a combination of functions implemented by these logical units/modules is a key to resolving the technical problems proposed in this application. In addition, to highlight the innovative part of this application, the foregoing device embodiments of this application do not introduce units/modules that are not closely related to resolving the technical problems proposed in this application, which does not indicate that no other units/modules exist in the foregoing device embodiments.

It should be noted that in examples and the specification of this patent, relational terms such as first and second are only used to distinguish one entity or operation from another, and do not necessarily require or imply that any actual relationship or sequence exists between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the existence of additional identical elements in the process, method, article, or device that includes the element.

Although this application has been illustrated and described with reference to some preferred embodiments of this application, a person of ordinary skill in the art should understand that the foregoing descriptions are merely specific implementations of the present invention, while the protection scope of the present invention is not limited thereto. Any change or replacement readily figured out by a person of ordinary skill in the art within the technical scope disclosed in the present invention shall fall within the protection scope of the present invention. Therefore, the protection scope of the present invention shall be subject to the protection scope of the claims.

## Claims

1. A face image processing method, comprising:

    obtaining a face image;
    detecting an eye feature based on the face image, and obtaining eye feature data, wherein the eye feature comprises an eyelid and an iris, and the eye feature data comprises an eyelid key point, an iris center, and an iris radius;
    determining an eye adjustment degree based on the eye feature data; and
    adjusting the eye feature in the face image based on the eye adjustment degree, to obtain a processed image.

2. The face image processing method according to claim 1, wherein the detecting an eye feature based on the face image, and obtaining eye feature data comprises:

    determining two eye corner points of each eye based on the face image;
    extracting an eye region from the face image by using the two eye corner points as a reference; and
    detecting the eye feature in the eye region to obtain the eye feature data.

3. The face image processing method according to claim 2, wherein the extracting an eye region from the face image by using the two eye corner points as a reference comprises:

    determining an eye image on the face image by using the two eye corner points as a reference; and
    processing the eye image to an image with a predetermined pixel value to obtain the eye region, wherein
    a connection line between the two eye corner points in the processed image is in a horizontal state.

4. The face image processing method according to claim 3, wherein the detecting the eye feature in the eye region to obtain the eye feature data comprises:

    detecting the eyelid key point in the eye region;
    determining an eyeball part mask within an eyelid based on the eyelid key point;
    determining an iris outline based on the eyeball part mask; and
    determining the iris center and iris radius based on the iris outline.

5. The face image processing method according to claim 4, wherein the determining an eyeball part mask within an eyelid based on the eyelid key point comprises:

fitting upper and lower eyelid curves based on the eyelid key point by using a quadratic function;
correcting an eyelid key point that deviates from the upper and lower eyelid curves; and
determining the eyeball part mask within the eyelid based on a corrected eyelid key point.

6. The face image processing method according to claim 4, wherein the determining an iris outline based on the eyeball part mask comprises:

performing brightness equalization to adjust a grayscale value of the eyeball part mask to obtain a grayscale map with predetermined brightness; and
performing thresholding processing on the grayscale map to obtain the iris outline after thresholding.

7. The face image processing method according to claim 6, wherein the determining the iris center and iris radius based on the iris outline comprises:
performing ellipse fitting on the iris outline after thresholding, using a center of an ellipse obtained by fitting as the iris center, and using a semi-major axis of the ellipse as the iris radius.

8. The face image processing method according to claim 6, wherein the determining an eye adjustment degree based on the eye feature data comprises:

determining, based on the eye feature data, whether the eye is blinking currently;
when it is determined that the eye is not blinking, determining the eye adjustment degree based on the eye feature data of the face image of the current frame, wherein the eye adjustment degree comprises an eyelid adjustment position and an iris center adjustment position; and
when it is determined that the eye is blinking currently, invoking the eye adjustment degree of a previous unblinking image in the last frame.

9. The face image processing method according to claim 8, wherein the determining, based on the eye feature data, whether the eye is blinking currently comprises:

calculating a ratio of an iris exposed part to an iris circle based on the iris outline after thresholding to obtain an iris ratio;
calculating an eye aspect ratio based on the eyelid key point; and
determining, based on the iris ratio and the eye aspect ratio, whether the eye is blinking currently.

10. The face image processing method according to claim 9, wherein the determining the eye adjustment degree based on the eye feature data of the face image of the current frame comprises:

determining an iris center adjustment position based on the two eye corner points; and
determining an eyelid adjustment position based on the iris center adjustment position, wherein the eyelid adjustment position comprises an upper eyelid highest point adjustment position and a lower eyelid lowest point adjustment position.

11. The face image processing method according to claim 10, wherein the adjusting the eye feature in the face image based on the eye adjustment degree position to obtain a processed image comprises:

separately adjusting an upper eyelid highest point to the upper eyelid highest adjustment position, and a lower eyelid lowest point to the lower eyelid lowest point adjustment position, and performing column-by-column pixel translation on remaining eyelid pixels in the eye region to perform eyelid adjustment; and
synthesizing an iris image based on the iris center, and moving the iris center to the iris center adjustment position to perform iris adjustment.

12. The face image processing method according to claim 11, wherein column-by-column pixel translation is performed in a middle predetermined range in the eye region, and after pixel translation, a gap generated after translation is filled by scaling based on a region outside the middle predetermined range in the eye region.

**13.** The face image processing method according to claim 11, wherein after the iris outline after thresholding is obtained, an eye white part mask is further obtained based on the eyeball part mask and the iris outline after thresholding; and after eyelid adjustment, eye white compensation is performed based on the eye white part mask, and after eye white compensation, the iris image is synthesized, and the iris center is moved to the iris center adjustment position.

**14.** The face image processing method according to any one of claims 1 to 13, further comprising:

obtaining head feature data based on the face image; and
determining a head rotation angle based on the head feature data, and performing rotation processing on the face image based on the head rotation angle.

**15.** A face image processing apparatus, comprising:

an image collection module, configured to obtain a face image;
a feature detection module, configured to detect an eye feature based on the face image, and obtain eye feature data, wherein the eye feature comprises an eyelid and an iris, and the eye feature data comprises an eyelid key point, an iris center, and an iris radius;
an adjustment degree determining module, configured to determine an eye adjustment degree based on the eye feature data; and
an adjustment module, configured to adjust the eye feature in the face image based on the eye adjustment degree, to obtain a processed image.

**16.** A video call method, applied to a terminal device, comprising: when a video call is started or during a video call, processing a face image of a participant in the video call by using the face image processing method according to any one of claims 1 to 14 by enabling a sight line correction function, and outputting a processed face image to a terminal device of a video call object.

**17.** The video call method according to claim 16, comprising:

enabling a video call application;
detecting whether a sight line of a person in a video call is facing the front;
when it is detected that the sight line is not facing the front, a sight line correction confirmation option appearing on the terminal device; and
when sight line correction is selected, enabling a sight line correction function.

**18.** The video call method according to claim 16, wherein the sight line correction function is enabled or disabled by using a preset switch.

**19.** An electronic device, comprising a processor and a memory, wherein

the memory stores instructions; and
the processor is configured to read the instructions stored in the memory, to perform the method according to any one of claims 1 to 14.

**20.** A computer readable storage medium, wherein the computer readable storage medium stores instructions, and when the instructions are run on a computer, the computer is enabled to perform the method according to any one of claims 1 to 14.

(a)

(b)

FIG. 1

Electronic device 100

FIG. 2

S100

Obtain a face image

S200

Detect an eye feature based on the face image, and obtain eye feature data, where the eye feature includes an eyelid and an iris, and the eye feature data includes an eyelid key point, an iris center, and an iris radius

S300

Determine an eye adjustment position based on the eye feature data

S400

Adjust the eye feature in the face image based on the eye adjustment position, to obtain a processed image

FIG. 3

S210

Determine two eye corner points of each eye based on a face image

S220

Extract an eye region from the face image by using the two eye corner points as a reference

S230

Detect an eye feature in the eye region to obtain eye feature data

FIG. 4

Detect an eyelid key point in an eye region — S231

Determine an eyeball part mask within an eyelid based on the eyelid key point — S232

Determine an iris outline based on the eyeball part mask — S233

Determine an iris center and an iris radius based on the iris outline — S234

FIG. 5

Step S300 starts — S310

Whether an eye is blinking currently

No → Determine an eye adjustment degree based on eye feature data of a current frame — S320

Yes

Invoke an eye adjustment degree of a previous unblinking image in a last frame — S330

Step S300 ends

FIG. 6

Step S400 starts

Separately adjust an upper eyelid highest point to an upper eyelid highest adjustment position, and a lower eyelid lowest point to a lower eyelid lowest point adjustment position, and perform column-by-column pixel translation on remaining eyelid pixels in an eye region to perform eyelid adjustment

S410

Perform eye white compensation based on an eye white part mask

S430

Synthesize an iris image based on an iris center, and move the iris center to an iris center adjustment position to perform iris adjustment

S420

Step S400 ends

FIG. 7

Face image processing apparatus 1000

Image collection module 500

Feature detection module 600

Adjustment degree module 700

Adjustment module 800

FIG. 8

Input a face image — S1

Extract an eye region — S2

Correct an eyelid key point — S3

Detect an iris and extract a parameter — S4

Whether an eye is blinking currently — S5

Yes

No

Calculate an iris center adjustment position — S6

Invoke a calculation result of a previous unblinking image in a last frame — S8

Calculate an eyelid adjustment degree — S7

Adjust an eyelid — S9

Compensate an eye white — S10

Synthesize an iris — S11

Output a corrected image — S12

FIG. 9

FIG. 10

FIG. 11

FIG. 12

FIG. 13

FIG. 14

FIG. 15

S20 — Input an original face image

S21 — Estimate a sight line

S22 — Whether the sight line faces the front

Yes

No

S24 — A sight line correction enablement option pops up for a user to select

S25 — Whether to enable

No

Yes

S26 — Perform a sight line correction procedure

S23 — Output the original face image

S27 — Output an image after sight line correction

FIG. 16

FIG. 17

1200

```
            ┌─────────────────┐
            │   Processor     │
            │     1201        │
            └─────────────────┘
                           1206
    ┌ ─ ─ ─ ─ ┐  ┌ ─ ─ ─ ─ ─ ┐  ┌ ─ ─ ─ ─ ┐
    │Coprocessor│  │Controller hub│  │ Memory  │
    │  1202    │  │    1203     │  │  1204   │
    └ ─ ─ ─ ─ ┘  └ ─ ─ ─ ─ ─ ┘  └ ─ ─ ─ ─ ┘

        ┌ ─ ─ ─ ─ ┐      ┌─────────────┐
        │   I/O    │      │    NIC      │
        │  1205    │      │   1206      │
        └ ─ ─ ─ ─ ┘      └─────────────┘
```

FIG. 18

1300

```
┌ ─ ─ ─ ─ ┐  ┌──────────────────────┐  ┌──────────────┐
│Coprocessor│  │   Processor 1310     │  │Bus controller unit│
│  1320    │  └──────────────────────┘  │     1390      │
└ ─ ─ ─ ─ ┘                              └──────────────┘
┌─────────┐  ┌──────────────────────┐  ┌──────────────┐
│SRAM unit │  │Interconnection unit 1350│  │System agent unit│
│  1330   │  └──────────────────────┘  │     1380      │
└─────────┘                             └──────────────┘

   ┌──────────────┐      ┌──────────────┐
   │Integrated memory│   │  DMA unit     │
   │controller unit 1340│ │   1360        │
   └──────────────┘      └──────────────┘
```

FIG. 19

## INTERNATIONAL SEARCH REPORT

| | International application No. |
|---|---|
| | **PCT/CN2021/092402** |

**A. CLASSIFICATION OF SUBJECT MATTER**

H04N 5/232(2006.01)i; G06K 9/00(2006.01)i

According to International Patent Classification (IPC) or to both national classification and IPC

**B. FIELDS SEARCHED**

Minimum documentation searched (classification system followed by classification symbols)

H04N G06K G06T

Documentation searched other than minimum documentation to the extent that such documents are included in the fields searched

Electronic data base consulted during the international search (name of data base and, where practicable, search terms used)

CNPAT, IEEE, CNKI, WPI, EPODOC: 人脸, 眼睛, 眼部, 图像, 校正, 矫正, 调整, 虹膜, 视线, face, eye, image, correct, adjust, iris, sight

**C. DOCUMENTS CONSIDERED TO BE RELEVANT**

| Category* | Citation of document, with indication, where appropriate, of the relevant passages | Relevant to claim No. |
|---|---|---|
| X | CN 110740246 A (ALIBABA HEALTH INFORMATION TECHNOLOGY LIMITED) 31 January 2020 (2020-01-31) description paragraphs 0033-0060, 0070-0071, 0085-0091, 0096, figures 1-6 | 1-7, 14-20 |
| X | CN 111031234 A (VIVO COMMUNICATION TECHNOLOGY CO., LTD.) 17 April 2020 (2020-04-17) description, paragraphs 0026-0075, 0085-0086 | 1-7, 14-15, 19-20 |
| Y | CN 110740246 A (ALIBABA HEALTH INFORMATION TECHNOLOGY LIMITED) 31 January 2020 (2020-01-31) description paragraphs 0033-0060, 0070-0071, 0085-0091, 0096, figures 1-6 | 8-14, 16-20 |
| Y | CN 111031234 A (VIVO COMMUNICATION TECHNOLOGY CO., LTD.) 17 April 2020 (2020-04-17) description, paragraphs 0026-0075, 0085-0086 | 8-14, 19-20 |
| Y | CN 109840565 A (CHENGDU UNIVERSITY et al.) 04 June 2019 (2019-06-04) abstract | 8-14, 16-20 |
| A | CN 108399903 A (BOE TECHNOLOGY GROUP CO., LTD.) 14 August 2018 (2018-08-14) entire document | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 July 2021** | **05 August 2021** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088 China | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/092402**

| Patent document cited in search report | | | Publication date (day/month/year) | Patent family member(s) | | | Publication date (day/month/year) |
|---|---|---|---|---|---|---|---|
| CN | 110740246 | A | 31 January 2020 | None | | | |
| CN | 111031234 | A | 17 April 2020 | None | | | |
| CN | 109840565 | A | 04 June 2019 | None | | | |
| CN | 108399903 | A | 14 August 2018 | US | 2019302464 | A1 | 03 October 2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010392999

- CN 105357513 B

**Non-patent literature cited in the description**

- **KUSTER C ; POPA T ; BAZIN J C et al.** Gaze correction for home video conferencing[J]. *ACM Transactions on Graphics (TOG),* 2012, vol. 31 (6), 174
- **TAO XIAOMING et al.** *Tsinghua University,* 2015

- Computer Graphics Forum. Wiley Online Library, 2018, vol. 37, 217-225
- 2010 IEEE Computer Society Conference on Computer Vision and Pattern Recognition. IEEE, 2010, 817-824